Europäisches Patentamt

(19) European Patent Office

Office européen des brevets

(11) Publication number : **0 271 664 B1**

# (12) EUROPEAN PATENT SPECIFICATION

(45) Date of publication of patent specification :
21.06.95 Bulletin 95/25

(51) Int. Cl.⁶ : **G06F 17/20**

(21) Application number : 87115183.3

(22) Date of filing : 16.10.87

(54) A morphological/phonetic method for ranking word similarities.

(30) Priority : 16.12.86 US 942123

(43) Date of publication of application :
22.06.88 Bulletin 88/25

(45) Publication of the grant of the patent :
21.06.95 Bulletin 95/25

(84) Designated Contracting States :
DE FR GB IT

(56) References cited :
US-A- 4 580 241
COMMUNICATIONS OF THE A.C.M. vol. 27, no.
4, April 1984, NEW YORK, USA pages 358 - 368;
J.J.POLLOCK ET AL.: 'automatic spelling cor-
rection in scientific and scholarly text '

(73) Proprietor : **International Business Machines
Corporation
Old Orchard Road
Armonk, N.Y. 10504 (US)**

(72) Inventor : **Zamora, Antonio
4601 North Park Avenue
Chevy Chase Maryland 20815 (US)**
Inventor : **Zamora, Elena M.
4601 North Park Avenue
Chevy Chase Maryland 20815 (US)**

(74) Representative : **Jost, Ottokarl, Dipl.-Ing.
IBM Deutschland Informationssysteme GmbH,
Patentwesen und Urheberrecht
D-70548 Stuttgart (DE)**

## Description

The invention disclosed broadly relates to data processing and more particularly relates to linguistic applications in data processing.

Text processing word processing systems have been developed for both stand-alone applications and distributed processing applications. The terms text processing and word processing will be used interchangeably herein to refer to data processing systems primarily used for the creation, editing, communication, and/or printing of alphanumeric character strings composing written text. A particular distributed processing system for word processing is disclosed in the European patent application 217 174 "Multilingual Processing for Screen Image Build and Command Decode in a Word Processor, with Full Command, Message and Help Support," by K. W. Borgendale, et al. The figures and specification of the Borgendale, et al. patent application gives an example of a host system within which the subject invention herein can be applied.

Previous work has described procedures for reducing the number of candidate words that have to be examined relative to a specific misspelled word to find a list of the best matched candidate words. One technique looks only at those words that differ in length by less than two characters and which retain the same initial character. Another technique uses a vector fetch approach which assigns each word in the dictionary a magnitude value based on the confusability of the characters in the word and only those words within a specific magnitude range of the misspelled word are retrieved.

In an article "Automatic Spelling Correction in Scientific and Scholarly text" published in the COMMUNICATION OF THE A.C.M., Vol. 27, No. 4, April 1984, NEW YORK, USA, pages 358 - 368, by J.J. Pollock et al., an automatic spelling correction system is described where an algorithm corrects misspellings of text from scientific and scholarly data bases. It uses a similarity key to identify words in a large dictionary that are most similar to a particular misspelling, and then an error-reversal test to select from these the most plausible corrections. The system is bases on the morphological properties of text of a selected language.

These techniques have been supplemented by double indexing ambiguous or silent first letters (e.g., phonograph under "P" and "F," knight under "K" and "N") to improve their performance in standard office environments.

Independent of these spelling aid techniques, statistical methods for determining similarities between strings have been developed and even implemented as integrated circuits. Methods such as the SOUNDEX system have been used to cluster names with similar phonetic characteristics to provide candidate file entries that then have to be screened manually for relevance.

Although these methods provide sets of candidate words, they have not integrated the morphological and phonetic components of language and, therefore, the candidates that they produce may be irrelevant or ranked in implausible order. It is strictly pointed out in this context that the term "morphologic" reflects the structural properties of words of a particular language, e. g. where particular letters are located in a particular word.

The term "phonetic" says that sound properties of spoken words of a particular language reflect the audible structure of words in a particular language and when spelled and translated into a data string, e. g. by scanning, the sounds represented by components of those strings are considered during word processing.

The above given definitions of "morphologic" and "phonetic" are used throughout the entire specification.

It is therefore an object of the invention to provide an improved data processing technique to rank the similarity of word strings.

It is another object of the invention to provide an improved technique for ranking the similarity of word strings so as to be immune to spelling errors in the input words.

It is still a further object of the invention to provide an improved technique for ranking the similarity of word strings which is more accurate and reliable than has been available in the prior art.

These and other objects, features and advantages of the invention are accomplished by a computer method for ranking the similarity of an input word from an input word string, as defined in the unique claim 1.

The salient features of the invention are: 1) the selection of morphological keys which are of particular value in the identification of string similarities; and 2) the use of the minimum distance measure between the sets of morphological and phonetic keys of two words as a criterion for their similarity. This means that the features that make two words similar will be taken into consideration regardless of whether these similarities are simply morphological or simply phonetic.

These and other objects, features and advantages will be more fully appreciated with reference to the accompanying figure:

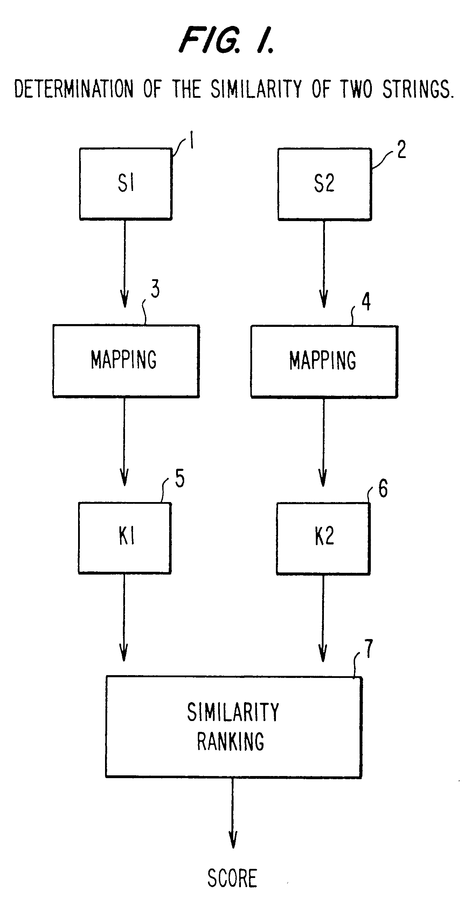

Fig. 1     is a flow diagram illustrating the determination of the proximity between two strings, in accordance with the invention.

It has been discovered that, given a misspelling or phonetic string, the most relevant candidates that can be obtained from a dictionary are those that have the closest phonetic or morphological characteristic. Determination of the proximity between two strings is accomplished as illustrated in Fig. 1. Two strings of characters, S1 and S2 are transformed using mapping functions into keys K1 and K2, respectively where K1 and K2 are other representations of S1 and S2. The keys are then compared by a similarity ranking procedure to produce a score that indicates the degree of proximity between the two keys. The scores for a list of candidates can be used to order the list so that the most likely candidates are at the top.

Mapping is the process of transforming one string into another representation (called a "key"). This invention recognizes three important types of mapping. 1) A null mapping is one that copies a string without changing it. 2) A mapping called morphological mapping is one that transforms a string based on its structural characteristics. 3) a mapping called phonetic mapping is one where the transformations are performed on the basis of the sounds represented by components of the input string. The similarity ranking procedure can be applied to the keys produced by any of these three mappings.

Mapping transformations can potentially change the way in which characters are represented without altering the underlying principles of similarity measurement described by this invention. The computer codes used to represent the alphabetic characters are different for ASCII, EBCDIC or other internal codes; what remains fundamentally unaltered, however, is the way in which the characters representing the words are partitioned into consonants or vowels. Vowels include "AEIOU," the letter "Y," and their representations with acute, grave, circumflex, tilde, dieresis, and other diacritical marks used in many European languages. Letters such as the Nordic "O" with a slash and the "AE" or "OE" ligatures are also considered vowels. The consonants include the remaining letters of the English alphabet plus the Spanish "N" with tilde, French cedilla, the Icelandic "thorn" and slashed "D." In the Greek and Cyrillic character sets, "vowels" are those associated with voiced characters and the remaining characters are the consonants.

Mappings can be specified as a set of operations on a sequence of characters to obtain a new sequence of characters that may or may not resemble the original string. The set of operations can involve the selection of certain categories of letters (such as vowels) and their rearrangement, or it can involve the transformation of letter sequences into other sequences of letters, phonetic codes, computer codes, etc. Such transformations can be expressed as "rewrite rules" which are either specific or generic. The rule "SS" -> "S" indicates that the specific string "SS" should be replaced by "S," whereas a rule such as "##" → "#" (the symbol # representing any letter a word of a particular language may contain) could indicate a replacement of all adjacent doubled characters by a single occurrence.

The purpose of a morphological mapping is to create keys that are invariant for certain types of errors, such as doubling of letters, in the input string. The keys of such variants will have similarities that will be detected during the ranking procedure.

Example 1: If we define mapping such that the unique consonants of the input are listed in their original order followed by the unique vowels, also in their original order, then the following keys will be produced:

```
    input string              key

    ------------              ------------

    DETERMINE                 DTRMNEI

    DETREMINE                 DTRMNEI

    DETERRMINE                DTRMNEI

    DETEMRINE                 DTMRNEI
```

As can be seen from the keys generated, this mapping generates identical keys for any consonant/vowel transpositions or doubled letters, whereas consonant/-consonant transpositions generate different keys.

Example 2: If we define a mapping such that the unique consonants of the input are listed in alphabetical order followed by the unique vowels, also in alphabetical order, then the following keys will be produced.

| input string | key |
| --- | --- |
| DETERMINE | DMNRTEI |
| DETREMINE | DMNRTEI |
| DETERRMINE | DMNRTEI |
| DETEMRINE | DMNRTEI |

This mapping is insensitive to consonant/vowel transpositions, consonant/consonant transpositions, and doubled letters.

Phonetic mapping creates keys that are invariant for similar sounds. Phonetic keys can be constructed from the input strings by application of text-to-speech rules. Also, by reducing the precision of the pronunciation, it is possible to increase the set of words that share similar sounds. Both one-to-many and many-to-one mappings are allowed (e.g., "X" → "KS" and "PH" → "F," respectively). The mapping procedures may be implemented in a variety of ways to detect and eliminate silent letters.

Example 3: Define a mapping such that "CC" generates "KS," "X" generates "KS," "CE" generates "SE," other letters map to themselves, and all multiple letters are reduced to single letters.

| input string | key |
| --- | --- |
| ACCESS | AKSES |
| AXES | AKSES |
| EXCESS | EKSES |

The word "EXCESS" generates the intermediate "EKSSESS" by simple substitution, and finally becomes the key "EKSES" after duplicate letter removal.

Similarity between two strings is a property that can be measured in terms of the operations required to convert one string into another. There are four basic operations that can be used to convert strings: substitution, transposition, insertion, and deletion.

The string "ABCD" can be converted into the string "ABXX" by two different substitutions, into "BACD" by transposition of the first two characters, into "ABD" by deletion of one character, and into "ABXCD" by insertion of one character. Although transposition may be viewed as consisting of one deletion and one insertion, it is generally considered one basic operation.

The number of basic operations (NBO) required to convert one string into another can be obtained by iteratively testing the characters of one string against the other. When the characters are different, it is possible to determine whether the error is one of substitution insertion, deletion, or transposition by scanning ahead until equal characters are found. When the characters being compared are again synchronized, the process is repeated until the end of the shortest string is reached and the remaining characters in the longer string, if any, are considered insertion errors.

Another measure of string similarity is the length of their common substrings. Thus, the string "PERFORMACE" and the word "PERFORMANCE" have one common substring of length 8 ("PERFORMA") and another one of length 2 ("CE"). The word "PERFORMABLE" has substrings of length 8 and 1 in common with the string "PERFORMACE." It is possible to design a score function that reflects the fragmentation and the location of the disparities by associating weight factors with the lengths of the common substrings and by normalizing with respect to the maximum possible. This allows us to rank the similarity of the strings "PERFORMANCE," "PREFORMANCE," "PERFROMANCE," etc.

A measure of similarity based on the common substrings occurring in two strings can be constructed as follows: given two strings of length L1 and L2 having common substrings of length X1, X2,..., such that X1 + X2 + ... <= MIN(L1,L2) a measure (M) of their similarity can be obtained by adding the sum of the squares of the substring lengths and dividing by the square of L1 or L2, whichever is smaller, indicated by the notation MIN, and subtracting the result from one, i.e., $M = 1 - ( (X1*X1 + X2*X2 + ...)/ (MIN(L1,L2)*MIN(L1,L2) ) )$. M will have fractional values from 0 to 1, and the words will be most similar when M is closer to zero.

M, by itself, is not sufficient as a string similarity measure since it only represents the size of the common substrings relative to the maximum possible common substring. The sum of NBO and M, however, can serve as a uniform measure for comparing two strings, and the closer the sum is to zero, the more similar the strings are.

The string similarity measures may be applied against input strings (null mappings) or against the keys derived from them. The similarities revealed by the combined effect of word mapping and similarity ranking is illustrated by counting the basic transformation operations required to change one word into another and by determining their common substrings. The following examples are for a null mapping, for the morphological key in example 1, and for the phonetic key in example 3.

Null Mapping

|  |  |  |  | Basic Operations | Lengths of Common Substrings |
|---|---|---|---|---|---|
| string: | ACCESS | AXES |  |  |  |
| key: | ACCESS | AXES |  | 3 | 1,2 |
| string: | AXES | EXCESS |  |  |  |
| key: | AXES | EXCESS |  | 3 | 1,2 |

Morphological Mapping

|  |  |  |  | Basic Operations | Lengths of Common Substrings |
|---|---|---|---|---|---|
| string: | ACCESS | AXES |  |  |  |
| key: | CSAE | XSAE |  | 1 | 3 |
| string: | AXES | EXCESS |  |  |  |
| key: | XSAE | XCSE |  | 2 | 1,1,1 |

Phonetic Mapping

|  |  |  | Basic<br>Operations | Lengths of Common<br>Substrings |
|---|---|---|---|---|
| string: | ACCESS | AXES |  |  |
| key: | AKSES | AKSES | 0 | 5 |
| string: | AXES | EXCESS |  |  |
| key: | AKSES | EKSES | 1 | 4 |

The words used for illustration differ substantially in their surface structure, however, the mappings bring out similarities in the morphological or phonetic structure of the strings that result in better scores (reflected by lower number of basic operations and longer common substrings). In practice, the scoring mechanism may examine the results of several keys to determine the closest morphological or phonetic neighbors and select the candidates with the best scores.

**Claims**

1. A computer method for ranking the similarity of an input word from an input word string, to words stored in a dictionary storage, using an analysis of said input word string with respect to its properties, consisting in :

a) - reading the characters of a first word from the input word string (1) into a first storage and creating an input key word (5) by first mapping (3),

b) - reading the characters of a dictionary word from a string (2) of stored dictionary words into a second storage and creating a dictionary key word (6) by second mapping (4), said mappings being performed by
   - a null mapping by which a string is copied without changing it,
   - a mapping by which a string is transformed by use of rules which keep in account its structural characteristics (positions of characters in a word string) and/or
      the sounds represented by the components of the input string,

c) - generating a score called morphological score by similarity ranking (7) in combining: 1) a first scoring factor consisting of the number of change operations required to make said input key word with said dictionary key word, and 2) a second scoring factor generated by measuring the length of identical character segments in said input key word and said dictionary key word, characterized by

d) - creating an input phonetic key word by replacing the characters of the input word with univocally corresponding phonetic character representations;

e) - creating a dictionary phonetic key word by replacing the characters of said dictionary word with univocally corresponding phonetic character representations;

f) - generating a score called phonetic score by combining 1) a first scoring factor consisting of the number of change operations required to make said input phonetic key word with said dictionary phonetic key word, and 2) a second scoring factor generated by measuring the length of identical character segments in said input phonetic key word and said dictionary phonetic key word, and

g) - selecting the lower of the morphologic or phonetic score as a measure of the distance between said input word and said dictionary word, the key words being created according to one or more of the above mappings and the score factors as a measure of similarity being based on common substrings of length $X_1, X_2, ...,$ occurring in two strings (1, 2) of length $L_1$ and $L_2$, such that $X_1 + X_2 + ... <= MIN(L_1, L_2)$, the similarity M being $M = 1 - ((X_1 * X_1 + X_2 * X_2 + ...)/(MIN(L_1, L_2) * MIN(L_1, L_2)))$.

**Patentansprüche**

1. Computerverfahren zur Einstufung der Ähnlichkeit eines Eingabewortes aus einer Eingabewortkette zu Wörtern, die in einem Wörterbuchspeicher gespeichert sind, wobei eine Analyse der Eingabewortkette hinsichtlich ihrer Eigenschaften verwendet wird; bestehend aus:

a) Lesen der Zeichen eines ersten Wortes von der Eingabewortkette (1) in einen ersten Speicher und Erzeugen eines Eingabeschlüsselwortes (5) durch erstes Zuordnen (3),

b) Lesen der Zeichen eines Wörterbuchwortes aus einer Kette (2) gespeicherter Wörterbuchwörter in einen zweiten Speicher und Erzeugen eines Wörterbuchschlüsselwortes (6) durch zweites Zuordnen (4), wobei die Zuordnungen ausgeführt werden durch

- eine Nullzuordnung, durch die eine Kette kopiert wird, ohne sie zu verändern,
- eine Zuordnung, durch die eine Kette umgewandelt wird, indem Regeln verwendet werden, die ihre strukturellen Merkmale (Positionen von Zeichen in einer Wortzeichenkette) und/oder die Laute berücksichtigen, die durch die Bestandteile der Eingabezeichenkette dargestellt werden,

c) Erzeugen einer Bewertung, die morphologische Bewertung genannt wird, durch Berechnung der Ähnlichkeit (7) durch Kombination von: 1) einem ersten Bewertungsfaktor, der aus der Zahl von Änderungsoperationen besteht, die erforderlich sind, um das Eingabeschlüsselwort zu dem Wörterbuchschlüsselwort zu machen, und 2) einem zweiten Bewertungsfaktor, der durch Messen der Länge identischer Zeichensegmente in dem Eingabeschlüsselwort und dem Wörterbuchschlüsselwort erzeugt wird, gekennzeichnet durch

d) Erzeugen eines phonetischen Eingabeschlüsselwortes durch Ersetzen der Zeichen des Eingabewortes durch eindeutig entsprechende phonetische Zeichendarstellungen;

e) Erzeugen eines phonetischen Wörterbuchschlüsselwortes durch Ersetzen der Zeichen des Wörterbuchwortes durch eindeutig entsprechende phonetische Zeichendarstellungen;

f) Erzeugen einer Bewertung, die phonetische Bewertung genannt wird, durch Kombination von: 1) einem ersten Bewertungsfaktor, der aus der Zahl von Änderungsoperationen besteht, die erforderlich sind, um das phonetische Eingabeschlüsselwort zu dem phonetischen Wörterbuchschlüsselwort zu machen, und 2) einem zweiten Bewertungsfaktor, der durch das Messen der Länge identischer Zeichensegmente in dem phonetischen Eingabeschlüsselwort und dem phonetischen Wörterbuchschlüsselwort erzeugt wird, und

g) unter der morphologischen oder phonetischen Bewertung die niedrigere als ein Maß für die Entfernung zwischen dem Eingabewort und dem Wörterbuchwort auswählen,

wobei die Schlüsselwörter gemäß einer oder mehrerer der obigen Zuordnungen erzeugt werden und die Bewertungsfaktoren als Ähnlichkeitsmaß auf gemeinsamen Unterzeichenketten der Längen X1, X2, ... basieren, die in zwei Ketten (1, 2) der Längen L1 und L2 auftreten, so daß X1 + X2 + ... <=MIN(L1, L2), die Ähnlichkeit M ist M = 1 - ((X1∗X1 + X2∗X2 + ...)/(MIN(L1, L2)∗MIN(L1, L2))).

**Revendications**

1. Une méthode d'ordinateur pour l'évaluation de la similitude entre un mot d'entrée d'une série de mots d'entrée, et des mots emmagasinés dans une mémoire de dictionnaire, utilisant une analyse de ladite série de mots d'entrée par rapport à ses propriétés, consistant à:

a) lire les caractères d'un premier mot de la série de mots d'entrée (1) dans une première mémoire et à créer un mot clé d'entrée (5) par un premier mappage (3),

b) lire les caractères d'un mot de dictionnaire d'une série de mots de dictionnaire emmagasinés, dans une seconde mémoire et à créer un mot clé de dictionnaire (6) par un second mappage (4), lesdits mappages étant assurés par:

- un mappage nul par lequel une série est copier sans changement,
- un mappage par lequel une série est transformée par l'utilisation de règles qui tiennent compte de ses caractéristiques structurales (positions des caractères dans une série de mots) et/ou des sons représentés par les composants de la série d'entrée,

c) générer un résultat appelé un résultat morphologique par l'évaluation des similitudes (7) en combinant: 1) un premier facteur de résultat composé du nombre d'opérations de changement requises pour former ledit mot clé d'entrée avec ledit mot clé de dictionnaire, et 2) un second facteur de résultat généré par la mesure de la longueur des segments de caractères identiques dans ledit mot clé d'entrée et ledit mot de dictionnaire, caractérisée par:

d) la création d'un mot clé phonétique d'entrée en remplaçant les caractères du mot d'entrée par des représentations de caractères phonétiques univoques correspondants;

e) la création d'un mot clé phonétique de dictionnaire en remplaçant les caractères dudit mot de dictionnaire par des représentations de caractères phonétiques univoques correspondants;

f) la génération d'un résultat appelé un résultat phonétique en combinant 1) un premier facteur de résultat composé du nombre d'opérations de changement requises pour former ledit mot clé phonétique d'entrée avec ledit mot clé phonétique de dictionnaire, et 2) un second facteur de résultat généré par la mesure de la longueur de segments de caractères identiques dans ledit mot clé phonétique d'entrée et ledit mot clé phonétique de dictionnaire, et

g) la sélection du résultat inférieur des résultats morphologique et phonétique comme mesure de la distance entre ledit mot d'entrée et ledit mot de dictionnaire,

les mots clés étant crées selon l'un ou plusieurs des mappages indiqués ci dessus et les facteurs de résultat comme mesure des similitudes étant basés sur des séries secondaires de longueur communes X1, X2, ..., survenant dans deux séries (1, 2) de longueurs L1 et L2, de façon que X1 + X2 + ... <=MIN(L1, L2), la similitude M étant la suivante: M = 1 - ((X1*X1 + X2*X2 + ...)/(MIN(L1, L2)*MIN(L1, L2))).

# *FIG. I.*

## DETERMINATION OF THE SIMILARITY OF TWO STRINGS.